# EUROPEAN PATENT APPLICATION

(11) **EP 1 133 073 A1**
(43) Date of publication of application: **12.09.2001**
(21) Application number: 00960964.5
(22) Date of filing: 13.09.2000
(51) Int. Cl.: H04B 7/06, H04B 7/26, H04J 13/04

(54) **RADIO TRANSMITTER AND TRANSMISSION DIVERSITY**

(30) Priority: 22.09.1999 JP 26832699
(71) Applicant: MATSUSHITA ELECTRIC INDUSTRIAL CO., LTD., Kadoma-shi, Osaka 571-8501 (JP)
(72) Inventor: HAYASHI, Masaki, Yokosuka-shi, Kanagawa 239-0847 (JP)
(74) Representative: Grünecker, Kinkeldey, Stockmair & Schwanhäusser Anwaltssozietät
(86) International application number: JP0006242
(87) International publication number: WO0122619

(57) **Abstract**

Control of antenna balance may be realized without waste of energy distributed to the antennas and accurately, not by fixing or extremely changing antenna balance, but by gradual switching of weighting coefficients for the antennas at transmission according to the amount and the ratio of the signal power of the antennas.

## Description

### Technical Field

The present invention relates to a radio transmission apparatus and a method for diversity transmission used in a digital radio communication system.

### Background Art

In a digital radio communication system, signal quality at reception sides is deteriorated, as transmitted signals are influenced by fading. There has been a diversity technology as one of effective measures against the above fading.

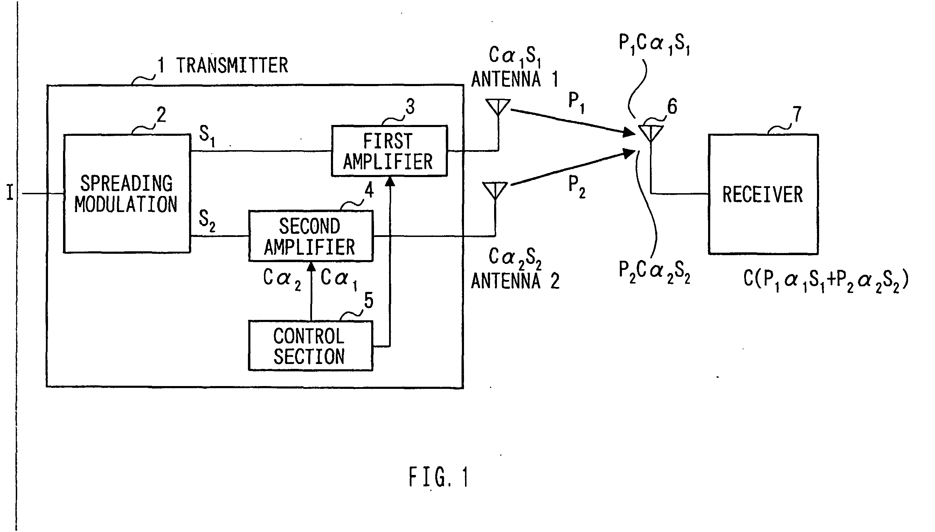

In the diversity technology, there is a diversity transmission technology for diversity processing with reduced processing loads at the reception sides by provision of a diversity branch at the transmission sides . A conventional radio transmission apparatus for diversity transmission will be described, referring to FIG. 1.

A transmitter 1, shown in FIG. 1, which is a radio transmission apparatus is provided with transmission antennas 1 and 2, and performs diversity transmission with the above two antennas as diversity branches. The transmitter 1 comprises a spreading section 2 for spreading processing through multiplication of a signal I by a predetermined spread code; a first and second amplifiers 3, 4 for respective amplification of the signals after spreading S₁, S₂; and a control section 5 for control of weighting of the above first and second amplifiers 3, 4.

In the case of diversity transmission communication from the transmitter 1 provided with the above configuration to a receiver 7, the information signal I undergoes the spreading at the spreading section 2, and the spreading signals S₁, S₂ after the above spreading are input to the first amplifier 3 and the second amplifier 4, respectively; amplified at the first amplifier 3 and the second amplifier 4, respectively; and transmitted from the antennas 1, 2.

Then, the spreading signals S₁, S₂ are multiplied by an amplification factor C in the first and second amplifiers 3, 4, and at the same time, undergo weighting processing using a ratio αₖ of an antenna component (the above ratio shows a ratio between the antennas, that is a ratio of the transmission power from one of the antennas to that from the other one, and k denotes an antenna number). Here, the above ratio αₖ (weighting coefficient) is controlled by the control section 5. Therefore, the spreading signal S₁ is multiplied by a coefficient Cα₁ in the first amplifier 3, and similarly the spreading signal S₂ by a coefficient Cα₂ in the second amplifier 4.

The signal Cα₁S₁ processed above is transmitted from the antenna 1, and similarly the signal Cα₂S₂ from the antenna 2. The above signals Cα₁S₁, Cα₂S₂ are multiplied by the propagation path states P₁, P₂, respectively, into P₁Cα₁S₁, P₂Cα₂S₂ for reception at the receiver 7 through an antenna 6. Accordingly, the signals in the form of C (P₁α₁S₁, P₂α₂S₂) are configured to be received at the receiver 7.

As described above, the ratio αₖ of the antenna component is controlled at the control section 5 of the transmitter 1. Specifically, there are, in general, two kinds of general methods for the above control. In a first method, α₁ is assumed to be the same as α₂, that is, they are set so as to be α₁ = α₂ = 0.5. According to a second method, there is assumed to be switching between the antennas 1, 2, that is, between two patterns of (α₁ = 1, α₂ = 0) and (α₁ = 0, α₂ = 1). The above second method is further classified to one method for switching between the antennas 1, 2 at a predetermined interval, and to the other one for switching according to propagation path states (according to the values of P₁ and P₂).

However, in the above first method, distribution of energy to the antenna 2 causes substantial waste, when the propagation path state P₁ of the side of the antenna 1 is much better than that of the antenna 2 (P₁ >> P₂). Similarly, distribution of energy to the antenna 1 causes substantial waste, when the propagation path state P₂ of the side of the antenna 2 is much better than that of the antenna 1 (P₂ >> P₁).

And, switching to one antenna in a worse propagation path state may occur in some case, in the above switching method at a predetermined interval among the second methods. That is, there may be a case of (α ₁ = 0, α₂ = 1) at P₁ > P₂, or (α₁ = 1, α₂ = 0) at P₁ < P₂.

Moreover, in the switching method according to the propagation path states among the above second methods, it is usual that switching control information generated based on a propagation path state is received, and the pattern of the transmission power ratio between the antennas is switched according to the above switching control information. In such a case, switching to one antenna in a worse propagation path state may also occur in some case in a similar manner to that of the above case, as accurate switching control may not be realized, when there is a large delay in transmission, or improper transmission of the control information. That is, there may be a case of (α₁ = 0, α₂ = 1) at P₁ > P₂, or (*α*₁ = 1, α₂ = 0) at P₁ < P₂.

### Disclosure of Invention

The object of the present invention is to provide a radio transmission apparatus, and a method for diversity transmission for accurate controlling of transmission power ratios between antennas without waste of energy distributed to the antennas.

The subject of the present invention is to accurately control the transmission power ratios between the antennas without waste of energy distributed to the antennas, not by fixing or extreme changing of the transmission power ratios between the antennas, but by gradual switching of weighting coefficients for the antennas according to the amounts and the ratios of the signal power of the antennas through weighting for antennas at transmission.

### Brief Description of Drawings

FIG. 1 is an explanatory block diagram of a diversity transmission method;
FIG. 2 is a block diagram showing a configuration of a base station apparatus provided with a radio transmission apparatus according to an embodiment 1 of the present invention;
FIG. 3 is a block diagram showing a configuration of a communication terminal apparatus for radio communication with the base station apparatus shown in FIG. 2;
FIG. 4 is a block diagram showing an inner configuration of a control section of the base station apparatus shown in FIG. 2;
FIG. 5 is a block diagram showing an inner configuration of a control information generation section in the communication terminal apparatus shown in FIG. 3;
FIG. 6 is a view showing a transmission power ratio table used in the diversity transmission method according to the present invention;
FIG. 7A is a view showing shift curves of transmission power ratios used in the according to the present invention;
FIG. 7B is a view showing shift curves of transmission power ratios used in the diversity transmission method according to the present invention;
FIG. 7C is a view showing shift curves of transmission power ratios used in the diversity transmission method according to the present invention;
FIG. 8 is a block diagram showing a configuration of a base station apparatus provided with a radio transmission apparatus according to an embodiment 2 of the present invention;
FIG. 9 is a block diagram showing a configuration of a communication terminal apparatus for radio communication with the base station apparatus shown in FIG. 8; and
FIG. 10 is a block diagram showing a configuration of a communication terminal apparatus according to an embodiment 3 of the present invention.

### Best Mode for Carrying Out the Invention

Hereinafter, embodiments of the present invention will be described in detail, referring to attached drawings.

### (Embodiment 1)

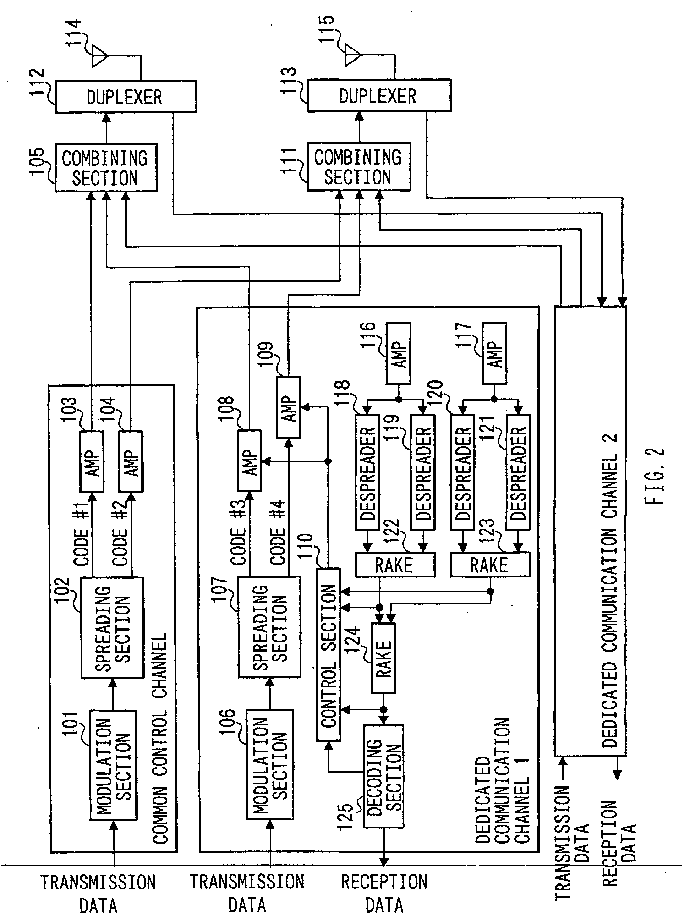

FIG. 2 is a block diagram showing a configuration of a base station apparatus provided with a radio transmission apparatus according to an embodiment 1 of the present invention. In the present embodiment, cases where a radio communication system is of a CDMA/FDD (Code Division Multiple Access/Frequency Division Duplexing) method will be described.

The base station apparatus comprises as shown in FIG. 2: a processing section for a common control channel; and processing sections for each dedicated communication channel (a dedicated communication channel 1, and a dedicated communication channel 2 in the present case).

The processing section for the common control channel comprises: a modulation section 101 for digital modulation of transmission data; a spreading section 102 for spreading of the signals after the above digital modulation; and amplifiers (AMPs) 103, 104 for amplification of the signals after the above spreading. Here, the processing section for the common control channel is described only for the transmission side, and the configuration of the reception side is eliminated in FIG. 2. The configuration of the reception side for the common control channel is the same as an ordinary configuration.

Respective processing sections for each dedicated communication channel comprise at the transmission side: a modulation section 106 for digital modulation of transmission data; a spreading section 107 for spreading of the signals after the above digital modulation; amplifiers (AMPS) 108, 109 for amplification of the signals after the above spreading, and, at the reception side: amplifiers 116, 117 for attenuation of the power of reception signals; despreaders 118 - 121 for despreading of reception signals; RAKE combining sections 122, 123 for RAKE combining of the outputs from the despreaders 118 - 121; a RAKE combining section 124 for RAKE combining of the outputs from the RAKE combining sections 122, 123; and a decoding section 125 for decoding of the signals after the above RAKE combining. And, the processing sections for each dedicated communication channel comprise a control section 110 for control of the transmission power ratios of each antenna to the total amount of the transmission power according to control information included in the reception signals from a communication terminal apparatus of a communication end, and at the same time for control of the total amount of the transmission power according to the control information on the transmission power from the communication terminal apparatus.

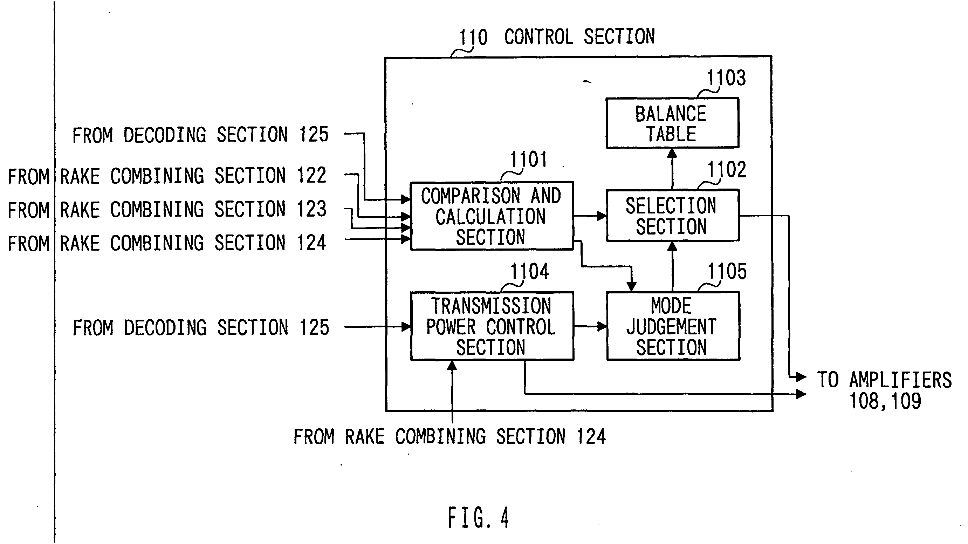

The control section 110 comprises, as shown in FIG. 4: a comparison and calculation section 1101 for comparison between both of the reception power corresponding to antennas 114, 115, and for measurement of the ratios of the reception power for each antenna to the total reception power by comparison and calculation using the signals after RAKE combining, or using the signals after decoding as required; a transmission power ratio table 1103 for correspondence between the comparison and calculation results of the comparison and calculation section 1101, and the transmission power ratios between the antennas for both of the transmission power of the antennas 114, 115 and the transmission power ratio curves; a transmission power control section 1104 for generation of transmission power control signals based on transmission power control bits generated at the side of the communication terminal apparatus, and/or the outputs after RAKE combining; a mode judgment section 1105 for accumulation of the above generated transmission power. control signals, and for judgement of the mode of the propagation path states based on the above accumulated results; and a selection section 1102 for selection of the transmission power ratios between the antennas, and the transmission power ratio curves from the transmission power ratio table 1103, based on information on the judged modes, and comparison and calculation results of the comparison and calculation section 1101.

In addition, the base station apparatus comprises: a combining section 105 for combining of the transmission signals of the common control channel, and those of the dedicated communication channels; duplexers 112, 113 for switching between transmission and reception; and antennas 114, 115 for transmission and reception of signals.

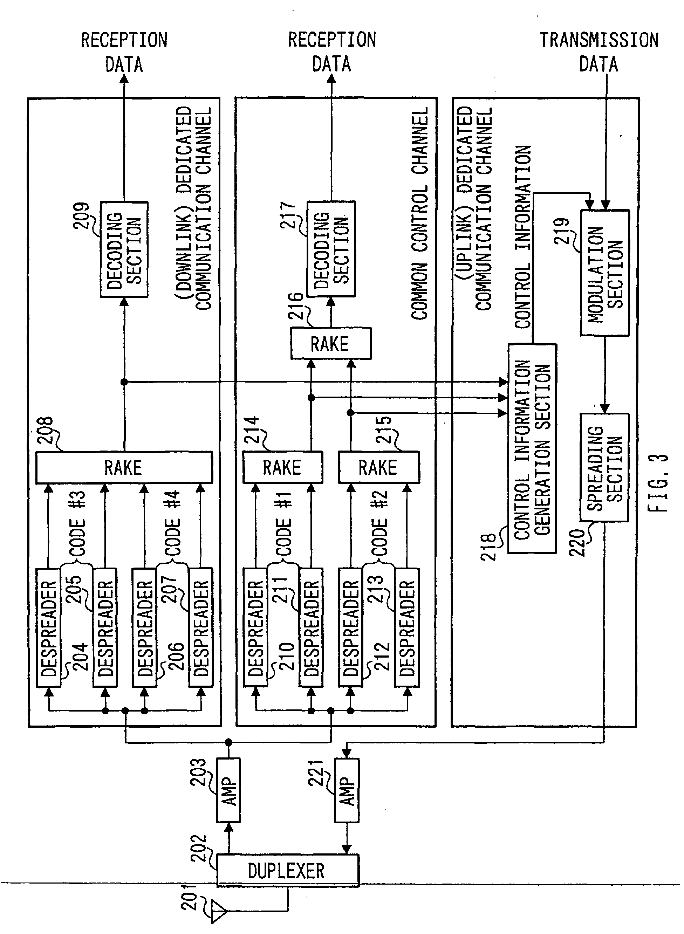

FIG. 3 is a block diagram showing a configuration of a communication terminal apparatus for radio communication with a base station apparatus according to the embodiment 1 of the present invention.

The communication terminal apparatus comprises processing sections for each dedicated communication channel and a processing section for the common control channel, as shown in FIG. 3. The processing sections for each dedicated communication channel comprise; a processing section for an uplink dedicated communication channel and a processing section for a downlink dedicated communication channel.

The processing section for the downlink dedicated communication channel comprises: despreaders 204 - 207 for despreading processing of reception signals; a RAKE combining section 208 for RAKE combining of the outputs from the despreaders 204 - 207; and a decoding section 209 for decoding of the signals after RAKE combining.

The processing section for the common control channel comprises: despreaders 210 - 213 for despreading processing of reception signals; RAKE combining sections 214, 215 for RAKE combining of the outputs from the despreaders 210 - 213; a RAKE combining section 216 for further RAKE combining of the outputs from the RAKE combining sections 214, 215; and a decoding section 217 for decoding of the signals after RAKE combining. Here, the processing section for the common control channel is described only for the transmission side, and the configuration of the reception side is eliminated in FIG. 3. The configuration of the transmission side for the common control channel is the same as an ordinary configuration.

The processing section for the uplink dedicated communication channel comprises: a modulation section 219 for digital modulation of transmission data; a spreading section 220 for spreading of the signals after the above digital modulation; and a control information generation section 218 for measurement of reception power using the outputs from the RAKE combining section 208 in the processing section for the downlink dedicated communication channel and the outputs from the RAKE combining sections 214, 215 in the processing section for the common control channel, and for generation of control information to control the total amount of the transmission power of the antennas in the side of the base station apparatus and the transmission power ratios to the total amount of the transmission power based on the above measurement results.

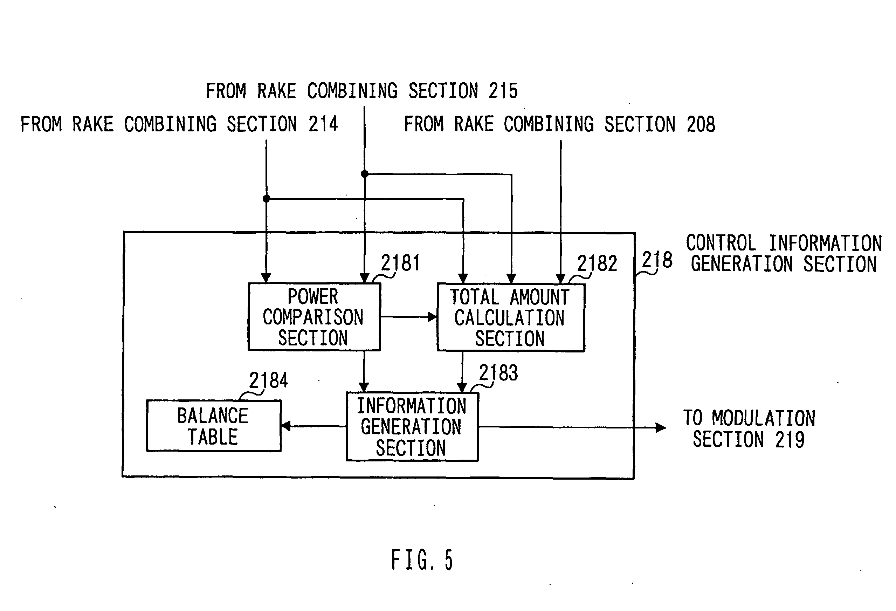

The control information generation section 218 comprises, as shown in FIG. 5: a power comparison section 2181 for comparison of both of the reception power using outputs from the RAKE combining sections 214, 215 in the processing section for the common control channel; a total amount calculation section 2182 for calculation of the total amount of the reception power using the outputs from the RAKE combining section 214, 215 in the processing section for the common control channel, and from the RAKE combining section 208 in the processing section for the uplink dedicated communication channel; an information generation section 2183 for generation of the control information on the total amount of the transmission power and that on the transmission power ratio using the comparison results from the power comparison section 2181 and the calculation results from the total amount calculation section 2182; and a transmission power ratio table 2184 for correspondence between the comparison and calculation results, and the transmission power ratios between the antennas for both of the transmission power of the antennas 114, 115 and the transmission power ratio curves.

Moreover, the communication terminal apparatus comprises: an amplifier 221 for amplification of the transmission power of transmission signals; an amplifier 203 for attenuation of the reception power of reception signals; a duplexer 202 for switching between transmission and reception; and an antenna 201 for transmission and reception of signals.

There will be described a case, where diversity transmission according to the present embodiment using a base station apparatus, having the above configuration, provided with a radio transmission apparatus according to the present embodiment, and a communication terminal apparatus for radio communication with the above base station apparatus is performed.

In the first place, there will be described a case where transmission is performed from the base station apparatus to the communication terminal apparatus (downlink).

In the processing section for the common control channel, digital modulation of transmission data is performed in the modulation section 101, and the transmission signals after the above modulation undergo the spreading in the spreading section 102, where the above spreading processing of the transmission signals is performed, using spreading codes allocated for each antenna. That is, spreading processing is performed for transmission signals transmitted through the antenna 114, using a spreading code #1, and similarly for transmission signals transmitted through the antenna 115, using a spreading code #2.

In the processing section for the dedicated communication channel 1, digital modulation of transmission data is performed in the modulation section 106, and spreading of the transmission signals after the above modulation is performed in the modulation section 107, where the above spreading processing of the transmission signals is performed, using spreading codes allocated for each antenna. That is, the spreading processing of transmission signals to be transmitted through the antenna 114 is performed using a spreading code #3, and the above processing of transmission signals to be transmitted through the antenna 115 is performed using a spreading code #4. In the processing section for the dedicated communication channel 2, similar processing to that of the processing section for the dedicated communication channel 1 is also performed.

The transmission signals (spreading code #1) for the common control channel amplified with the amplifier 103, the transmission signals (spreading code #3) for the dedicated communication channel 1 amplified with the amplifier 108, and the transmission signals for the dedicated communication channel 2 amplified with an amplifier in the processing section for the dedicated communication channel 2 are fed for multiplication to the combining section 105, respectively. The multiplexed signals are transmitted to the communication terminal apparatus through the antenna 114 after passing through the duplexer 112.

The transmission signals (spreading code #2) for the common control channel amplified with the amplifier 104, the transmission signals (spreading code #4) for the dedicated communication channel 1 amplified with the amplifier 109, and the transmission signals for the dedicated communication channel 2 amplified with an amplifier in the processing section for the dedicated communication channel 2 are fed for multiplication to a combining section 111, respectively. The multiplexed signals are transmitted to the communication terminal apparatus through the antenna 115 after passing through the duplexer 113.

In such a case, the processing section for the dedicated communication channel 1 controls the transmission power ratio between those of the antennas 114, 115, and the transmission power ratio of the signals transmitted from the antennas 114, 115 to the total amount of the transmission power. The above control will be described later. Here, in the processing section for the dedicated communication channel 2, similar processing to that of the processing section for the dedicated communication channel 1 is also performed.

Signals transmitted from the base station apparatus are received through the antenna 201 of the communication terminal apparatus, and attenuated in the amplifier 203 after passing through the duplexer 202. The above signals are fed to the despreaders 204 - 207 in the processing section for the downlink dedicated communication channel, and to the despreaders 210 - 213 in the processing section for the common control channel. And, despreading processing of reception signals is performed in the despreaders 204 - 207 for extraction of the dedicated communication channel signals, and despreading processing of the above signals is performed in the despreaders 210 - 213 for extraction of the common control channel signal.

Specifically, the signals (spreading code #3) transmitted from the antenna 114 of the base station apparatus are extracted with the despreaders 204, 205 in the processing section for the downlink dedicated communication channel, and similarly signals (spreading code #4) transmitted from the antenna 115 of the base station apparatus with the despreaders 206, 207 in the processing section for the downlink dedicated communication channel. Here, the outputs of the despreaders 205, 207 are for the delay waves of the dedicated communication channel signals transmitted from the antennas 114, 115 of the base station apparatus.

Moreover, signals (spreading code #1) transmitted from the antenna 114 of the base station apparatus are extracted with the despreaders 210, 211 in the processing section for the common control channel, and similarly signals (spreading code #2) transmitted from the antenna 115 of the base station apparatus with the despreaders 212, 213 in the processing section for the common control channel (Translator's comment: originally "dedicated communication channel", but could be "the common control channel"). Here, the outputs of the despreaders 211, 213 are for the delay waves of the common control channel signals transmitted from the antennas 114, 115 of the base station apparatus.

In the processing section for the downlink dedicated communication channel, the outputs of the despreaders 204 - 207 are input to the RAKE combining section 208 for RAKE combining. The signals after the above RAKE combining are fed to the decoding section 209 for decoding as reception data, and, at the same time, to the control information generation section 218 of the processing section for the uplink dedicated communication channel.

In the processing section for the common control channel, the outputs of despreaders 210, 211 are input to the RAKE combining section 214 for RAKE combining. The signals after the above RAKE combining are fed to the RAKE combining section 216, and, at the same time, to the control information generation section 218 of the processing section for the uplink dedicated communication channel. Further, in the processing section for the common control channel, the outputs of the despreaders 212, 213 are input to the RAKE combining section 215 for RAKE combining. The signals after the above RAKE combining are fed to the RAKE combining section 216, and, at the same time, to the control information generation section 218 of the processing section for the uplink dedicated communication channel. And, the outputs of the RAKE combining sections 214, 215 are input to the RAKE combining section 216 for RAKE combining. The outputs of the RAKE combining section 216 are fed to the decoding section 217 for decoding as reception data.

Now, there will be described a case where transmission is performed from the communication terminal to the base station apparatus (uplink).

In the processing section for the uplink dedicated communication channel of the communication terminal apparatus, transmission data and control information generated in the control information generation section 218 are fed to the modulation section 219, where digital modulation of the transmission data and control information is performed and the signals after the above modulation are fed to the spreading section 220. In the spreading section 220, the spreading of signals after digital modulation is processed, using a predetermined spreading code, for amplification with the amplifier 221, and the signals after the amplification are transmitted to the base station apparatus through the antenna 201 after passing through the duplexer 202.

The signals transmitted from the communication terminal apparatus are received through the antennas 114, 115 of the base station apparatus, and fed to the amplifiers 116, 117 of the processing section for the dedicated communication channel 1 through the duplexers 112, 113 for attenuation. The above reception signals are fed to the despreaders 118 - 121. Then, the signals of the dedicated communication channel 1 in the reception signals are extracted with the despreaders 118 - 121. Here, the outputs of the despreaders 119, 121 are for the delay waves of the signals of the dedicated communication channels received with the antennas 114, 115 of the base station apparatus, respectively.

The outputs of the despreaders 118, 119 are input to the RAKE combining section 122 for RAKE combining. The signals after the above RAKE combining is fed to the RAKE combining section 124, and, at the same time, to the control section 110. And, the outputs of the despreaders 120, 121 are input to the RAKE combining section 123 for RAKE combining. The signals after the above RAKE combining are fed to the RAKE combining section 124, and, at the same time, to the control section 110. Moreover, in the RAKE combining section124, RAKE combining of the outputs of the RAKE combining sections 122, 123 is performed. The outputs of the RAKE combining section 124 are fed to the decoding section 125 for decoding as reception data. Furthermore, data after decoding are fed to the control section 110, as required. The above operations for reception are similarly performed for the dedicated communication channel 2.

Now, a diversity transmission method according to the present invention will be described.

In the processing section for the dedicated communication channel 1 of the base station apparatus, despreading of signals received with the antennas 114, 115 is performed in the despreaders 118 - 121, respectively, and RAKE combining of the above signals is done in the RAKE combining sections 122, 123. The above signals after the above RAKE combining are fed to the control section 110.

The signals after RAKE combining with the RAKE combining sections 122 - 124 are fed to the comparison and calculation section 1101 of the control section 110. Moreover, the control information transmitted from the communication terminal apparatus after decoding with the decoding section 125 is also fed to the comparison and calculation section 1101 of the control section 110. The comparison and calculation section 1101 calculates the total amount of transmission power from the antennas 114, 115, and the ratios of the transmission power for each of the antennas 114, 115 to the total amount of the transmission power, using: the outputs of the RAKE combining section 122 denoting the RAKE combining results of signals received through the antenna 114; the outputs of the RAKE combining section 123 denoting the RAKE combining results of signals received through the antenna 114; the outputs of the RAKE combining section 124 denoting the RAKE combining results of the outputs of the RAKE combining sections 122, 123, and control information transmitted from the communication terminal apparatus.

There are the following methods for calculation of the transmission power ratio between the above antennas.

Firstly, in a first method, weighting coefficients of the transmission power ratio are calculated, based on signals received with the base station apparatus. In the above method, the comparison and calculation section 1101 calculates the ratio of the reception power, using the outputs from the RAKE combining section 122, and those from the RAKE combining section123; and obtains the antenna transmission power ratios from the above calculated value. That is, the obtained information on the ratio of the reception power is fed to the selection section 1102.

Then, the outputs from the RAKE combining section 124 are fed to the comparison and calculation section 1101. The comparison and calculation section 1101 obtains the total amount of the reception power, based on the outputs from the RAKE combining section 124, and feeds the information on the above total amount to the selection section 1102, where the amplifiers 108, 109 are controlled according to the information on the total amount of the power, and the antenna transmission power ratio selected as above. Thereby, the ratios of the transmission power of each antenna to the total amount of the transmission power may be controlled.

On the other hand, the transmission power control section 1104 performs the transmission power control of a closed loop type by input, from the decoding section 125, of the information decoded from the transmission power control bits for each antenna which are included in the signals transmitted from the communication terminal apparatus, and by control of the amplifiers 108, 109 according to the above transmission power control bits. And, the transmission power control section 1104 controls the amplifiers 108, 109, according to the outputs from the RAKE combining section 124 for transmission power control of an open loop type for each antenna.

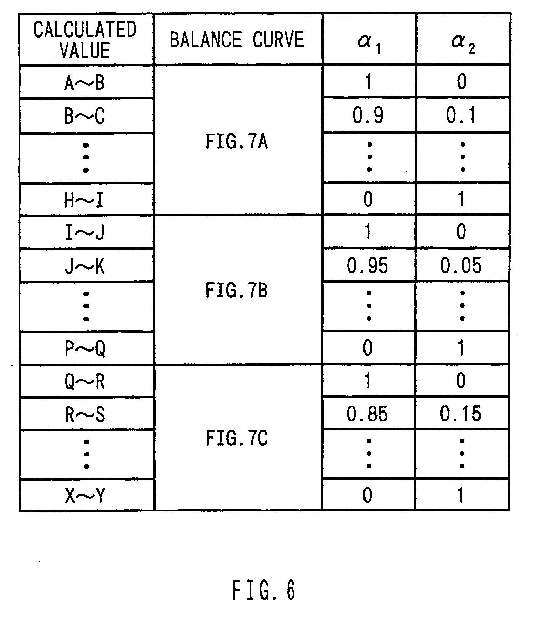

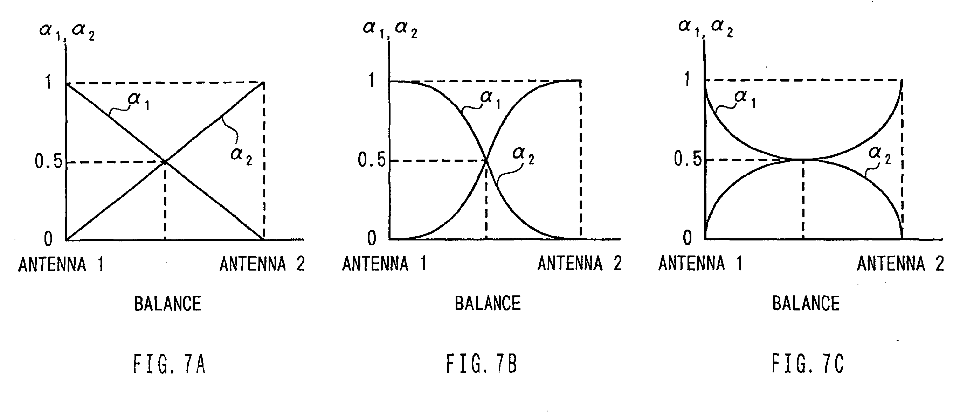

The control signals of the transmission power are fed to the amplifiers 108, 109, and, at the same time, to the mode judgement section 1105, where the control signals of the transmission power are accumulated, and the propagation path state is estimated from the above accumulated information for selection of a propagation path mode. The information on the above propagation path mode is fed to the selection section 1102, where transmission power ratio curves in the transmission power ratio table 1103 are selected using the information on the propagation path mode. The above transmission power ratio curves are curves shown in FIGs. 7A - 7C. There is no special limit in selection of the transmission power ratio curves for each propagation path state. Control of the antenna transmission power ratios with better reflection of the propagation path states may be realized by use of the control information on the transmission power for control of the transmission power ratios between the antennas.

Thus, in the selection section 1102, the weighting coefficient (α₁) of the antenna 114 and the one (α₂) of the antenna 115 are selected, referring to the transmission power ratio table shown in FIG. 6 with use of the calculated values by the comparison and calculation section 1101, and the modes by the mode judgment section 1105. Then, the amplifiers 108, 109 are controlled according to the transmission power ratios between the above antennas. Here, in the transmission power ratio table 1103, the calculated values and the weighting coefficients of the antennas 114, 115 are in multistep correspondence to each other, as shown in FIG. 6.

In a second method, the communication terminal apparatus generates the control information on the transmission power ratios using the reception signals for transmission to the base station apparatus, where the weighting coefficients of the transmission power ratios are calculated, based on the control information on the transmission power ratios.

In the above method, the common control channel signals from the base station apparatus are transmitted from the antennas 114, 115 with the same transmission power. The communication terminal apparatus feeds the outputs from the RAKE combining section 214 in the processing section for the common control channel, and those from the RAKE combining section 215 to the power comparison section 2181 in the control information generation section 218. The power comparison section 2181 compares the outputs from the RAKE combining section 214 with those from the RAKE combining section 215. In the base station apparatus, the downlink propagation path state may be obtained by comparison of the reception power at the side of the communication terminal apparatus, as the common control channel signals are transmitted at the same transmission power ratios between the antennas. That is, it may be recognized which antenna of the both is in a better propagation path state. The above comparison results are fed to the information generation section 2183.

On the other hand, the outputs from the RAKE combining section 208 in the processing section for the downlink dedicated communication channel are fed to the total amount calculation section 2182 in the control information generation section 218. The total amount calculation section 2182 measures the total amount of the reception power, and the information on the above total amount of the reception power is fed to the information generation section 2183.

The information generation section 2183 selects the weighting coefficient (α₁) of the antenna 114 and the weighting coefficient (α₂) of the antenna 115 of the base station apparatus, referring to the transmission power ratio table shown in FIG. 6 based on the comparison results from the power comparison section 2181, and generates control information on the transmission power ratios between the antennas. And, control information on the power total amount is generated from the information on the total amount of the power from the total amount calculation section 2182.

The above control information is transmitted to the base station apparatus, in which the control information is decoded, and the above decoded control information is fed to the control section 110, where the amplifiers 108, 109 are controlled according to the control information. That is, transmission power ratios between the antennas and the total amount of the power are controlled in a similar manner to that of the first method according to the control information.

Then, the communication terminal apparatus obtains an SIR from the reception power, and generates the transmission power control bits, comparing the above SIR with the standard SIR, in a similar manner to that of usual cases. In such a case, the transmission power control bits of each antenna 114, 115 are generated, using the reception power of each antenna 114, 115 in the base station apparatus of the processing section for the common control channel. The above transmission control bits are also transmitted to the base station apparatus, and used for control of the transmission power in the base station apparatus, as described above. Here, the transmission power control bits obtained at the side of the communication terminal apparatus are accumulated; the propagation path states are judged from the above accumulated results; and then, the transmission power ratio curves in the transmission power ratio table may be configured to be selected based on the above judgement results.

According to the above methods, gradual and smooth switching of the weighting coefficients are realized in a similar manner to that of the transmission power ratio curves shown in FIG. 7, as α₁ and α₂ are gradually switched by weighting for the antennas at transmission according to the amount and the ratio of the signal power of the antennas, while the transmission power ratios between the antennas are not fixed or extremely changed, that is, the weighting coefficients α₁, α₂ are not configured so as to be *α*₁ = α₂ = 0.5, or to be switched between two patterns of (α₁ = 1, α₂ = 0) and (α₁ = 0, α₂ = 1). Thereby, the transmission power ratios between the antennas may be accurately controlled without waste of energy distributed to the antennas, and transmission at a transmission power ratio between the antennas reflecting the propagation path states may be realized.

For example, when the propagation path state P₁ of the antenna 1 is better the one P₂ of the antenna 2, the transmission power ratio between the antennas is changed to the antenna 1 little by little (In FIG. 7, the transmission power ratio between the antennas is shifted to the left). That is, the weighting coefficient α₁ is increased. On the other hand, when the propagation path state P₂ of the antenna 2 is better the one P₁ of the antenna 1, the transmission power ratio between the antennas is changed to the antenna 2 little by little (In FIG. 7, the transmission power ratio between the antennas is shifted to the right). That is, the weighting coefficient α₂ is increased.

In the above case, the ratio of α₂ causing the waste is decreased, as α₁ is increased in the case of P₁ > > P₂. Similarly, the ratio of α₁ causing the waste is decreased, as α₂ is increased in the case of P₂ > > P₁. Thereby, even when accurate control may not be realized due to errors and so on, the effects of the control errors may be reduced, as the ratio of the side of a weighting coefficient causing the errors has been decreased.

Here, though cases where the weighting coefficient (α₁) of the antenna 114 and the one (α₂) of the antenna 115 are selected, referring to the transmission power ratio table with use of the calculated values by the comparison and calculation section 1101, and the modes by the mode judgment section 1105 have been described, the weighting coefficient (α₁) of the antenna 114 and the one (α₂) of the antenna 115 may be selected, referring to the transmission power ratio table only with use of the calculated values by the comparison and calculation section 1101 after previous determination of the propagation path modes (transmission power ratio curves).

### (Embodiment 2)

In the present embodiment, cases where a radio communication system is of a CDMA/TDD (Code Division Multiple Access/Time Division Duplexing) method will be described. In the case of the CDMA/TDD method, switches, instead of the duplexers, are used as switching means for transmission and reception.

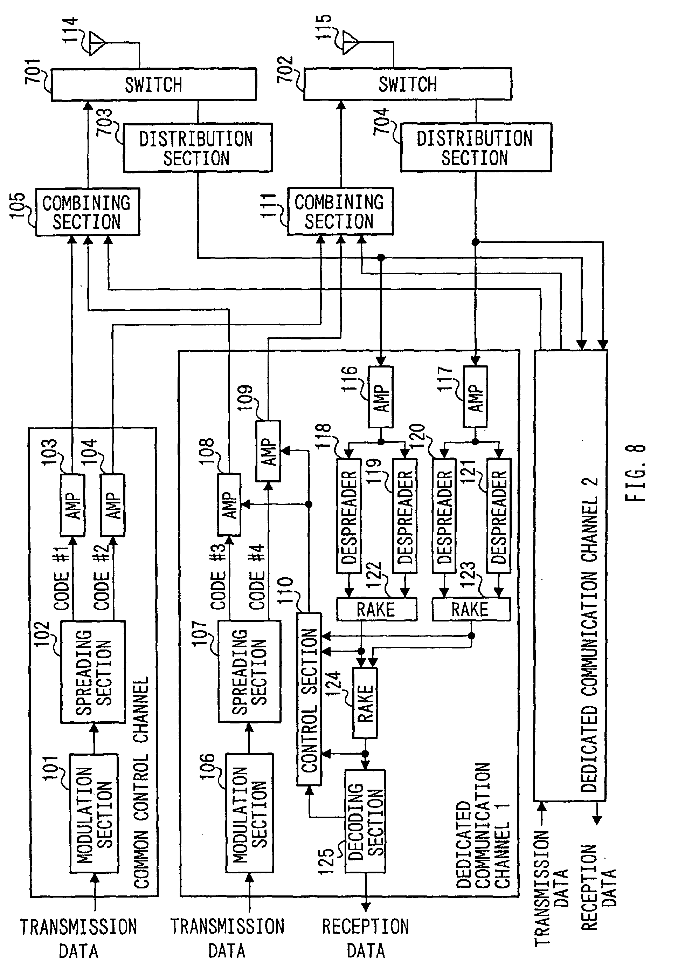

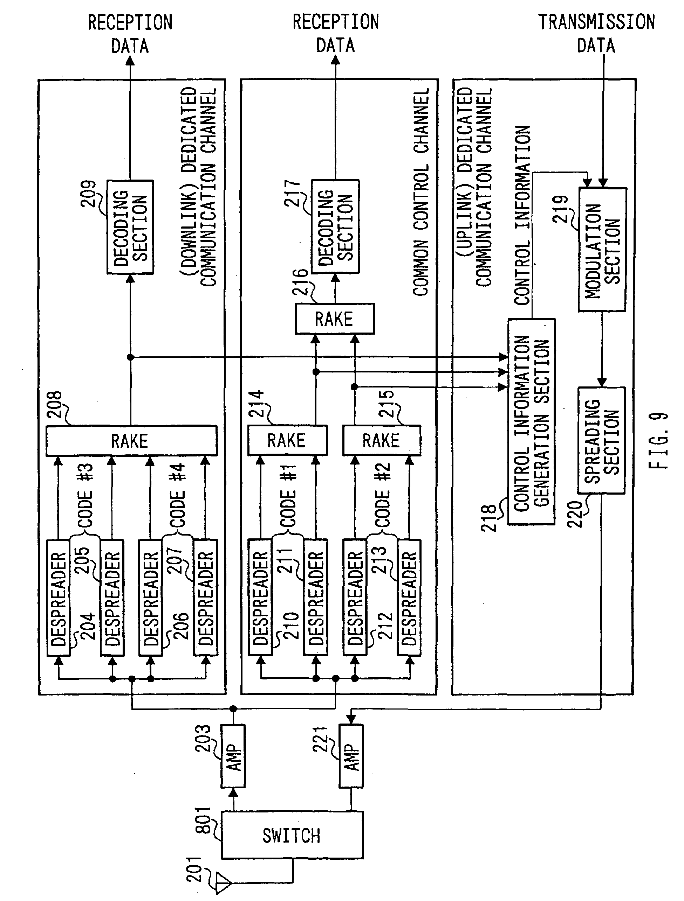

FIG. 8 is a block diagram showing a configuration of a base station apparatus provided with a radio transmission apparatus according to an embodiment 2 of the present invention, and FIG. 9 is a block diagram showing a configuration of a communication terminal apparatus for radio communication with the base station apparatus shown in FIG. 8. Here, sections similar to those previously described in FIG. 2 are denoted by the same reference numbers as those in FIG. 2, and the detailed description will be eliminated in FIG. 8; and sections similar to those previously described in FIG. 3 are denoted by the same reference numbers as those in FIG. 3, and the detailed description will be eliminated in FIG. 9.

In the base station apparatus shown in FIG. 8, a switching section between transmission and reception for the side of the antenna 114 is provided with a switch 701, and a distribution section 703; and a switching section between transmission and reception for the side of the antenna 115 is provided with a switch 702, and a distribution section 704. Then, the distribution section 703 distributes the signals to the amplifiers in each processing section for the dedicated communication channels at a predetermined interval, when the antenna 114 receives signals from the communication terminal apparatus; and the distribution section 704 distributes the signals to the amplifiers in each processing section for the dedicated communication channels at a predetermined interval, when the antenna 115 receives signals from the communication terminal apparatus. The processings thereafter are similar to those of the above embodiment 1. And, operations in a communication terminal apparatus shown in FIG. 9 are similar to those of the above embodiment 1.

As described above, gradual and smooth switching of the weighting coefficients are realized in a similar manner to that of the transmission power ratio curves shown in FIG. 7, even in the case of the CDMA/TDD method, as the weighting coefficients α₁, and α₂ are gradually switched not by fixing or extreme changing of the transmission power ratios between the antennas, but by weighting for antennas at transmission according to the amount and the ratio of the signal power of the antennas. Thereby, the transmission power ratios between the antennas may be accurately controlled without waste of energy distributed to the antennas, and transmission at a transmission power ratio between the antennas reflecting the propagation path states may be realized.

### (Embodiment 3)

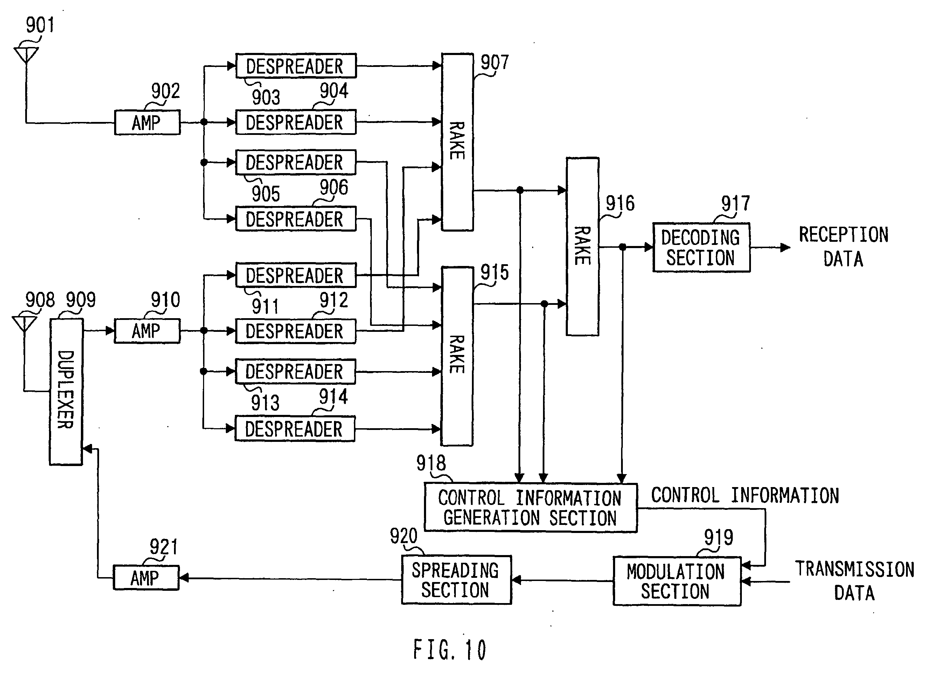

In the present embodiment, cases where a communication terminal apparatus is provided with a plurality of antennas will be described. FIG. 10 is a block diagram showing a configuration of a communication terminal apparatus according to the embodiment 3 of the present invention. Here, in the present embodiment, a base station apparatus has a similar configuration to that of FIG. 2 or FIG. 8, and the operations are also the same as those of the above embodiment 1, and the detailed description will be eliminated.

The signals transmitted from the communication terminal apparatus are received through an antenna 901 of the communication terminal apparatus, and attenuated with an amplifier 902. The above signals are fed to despreaders 903 - 906. Then, despreading processing of the reception signals is performed with the despreaders 903 - 906 for extraction of the signals transmitted from the antenna 114 and those transmitted from the antenna 115 of the base station apparatus.

Specifically, the signals (spreading code #3) transmitted from the antenna 114 of the base station apparatus are extracted with the despreaders 903, 904, and the signals (spreading code #4) transmitted from the antenna 115 of the base station apparatus are extracted with the despreaders 905, 906.

And, the signals transmitted from the communication terminal apparatus are received through an antenna 908 of the communication terminal apparatus, and attenuated in an amplifier 910 through a duplexer 909. The above signals are fed to despreaders 911 - 914. Then, despreading processing of the reception signals is performed with the despreaders 911 - 914 for extraction of the signals transmitted from the antenna 114 and those transmitted from the antenna 115 of the base station apparatus.

Specifically, the signals (spreading code #3) transmitted from the antenna 114 of the base station apparatus are extracted with the despreaders 911, 912, and the signals (spreading code #4) transmitted from the antenna 115 of the base station apparatus are extracted with the despreaders 913, 914 in each processing section for the dedicated communication channels.

Here, the outputs of the despreaders 904, 906, 912, 914 are for the delay waves of the signals of the dedicated communication channels transmitted from the antennas 114, 115 of the base station apparatus, respectively.

The outputs of the despreaders 903, 904, 911, 912 are fed to a RAKE combining section 907 for the antenna 114 for RAKE combining. And, the outputs of the despreaders 905, 906, 913, 914 are fed to a RAKE combining section 915 for the antenna 115 for RAKE combining. The signals after the above RAKE combining are fed to a RAKE combining section 916, and at the same time, to the control information generation section 218. Then, in the RAKE combining section 916, RAKE combining of the outputs of the RAKE combining sections 907, 915 is performed. The outputs of the RAKE combining section 916 are fed to the decoding section 917 for decoding as reception data.

The outputs from the RAKE combining section 907, and those from the RAKE combining section 915 are fed to a control information generation section 918. And, the outputs from the RAKE combining section 916 are fed to the control information generation section 918, where control information on the transmission power ratios between the antennas; control information on the total amount of the power: and control information on the transmission power are generated in a similar manner to that of the above embodiment 1.

The above control information is fed to the base station apparatus, where the control information is decoded and the decoded control information is fed to the control section 110. The control section 110 controls the amplifiers 108, 109 according to the above control information. That is, the transmission power ratio between the antennas and the total amount of the power are controlled according to the above control information.

As described above, gradual and smooth switching of the weighting coefficients are realized in a similar manner to that of the transmission power ratio curves shown in FIG. 7, even in the case of the communication terminal apparatus with a plurality of antennas, as the weighting coefficients α₁, and α₂ are gradually switched not by fixing or extreme changing of the transmission power ratios between the antennas, but by weighting for antennas at transmission according to the amount and the ratio of the signal power of the antennas. Thereby, the transmission power ratios between the antennas may be accurately controlled without waste of energy distributed to the antennas, and transmission at a transmission power ratio between the antennas reflecting the propagation path states may be realized.

Moreover, the above embodiments 1 - 3 may be properly combined for use.

The present invention is not limited to the above embodiments 1 - 3, and variations may be executed with modifications. For example, though cases where reception power is used as a standard parameter comparing the antennas for the communication terminal apparatus have been described in the above embodiments 1 - 3, the present invention may be applied to cases where reception SIR (Signal to Interference Ratio), BER (Bit Error Rate), CRC (Cyclic Redundancy Check), or combining thereof is used for the above parameter.

Moreover, though cases where there are two dedicated communication channels have been described in the above embodiments 1 - 3, the present invention may be applied to cases where the number of the above communication channels is one, or three or more.

A radio transmission apparatus according to the present invention has a configuration comprising: two antennas for diversity transmission; and a control section for gradual control of the transmission power ratios of the above two antennas according to information on the transmission power ratios between the antennas transmitted from a communication end.

According to the above configuration, the transmission power ratios between the antennas may be accurately controlled without waste of energy distributed to the antennas, as gradual switching of the weighting coefficients are realized not by fixing or extreme changing of the transmission power ratios between the antennas, but by weighting for antennas at transmission according to the amount and the ratio of the signal power of the antennas.

A radio transmission apparatus according to the present invention has a configuration where, in the above configuration, the above control section controls the transmission power ratios between the antennas to the total amount of the power based on the information on the total amount of the power transmitted from the above communication end. According to the above configuration, more accurate control of the transmission power ratios between the antennas may be realized without waste of energy, as the above control is performed in consideration of the total amount of the power.

A radio transmission apparatus according to the present invention has a configuration where, in the above configuration, the above control section performs transmission power control for each of the above two antennas based on the control information on the transmission power transmitted from the above communication end.

According to the above configuration, control of the transmission power with high accuracy may be performed according to the propagation path states, as the above control is performed for each dedicated antenna.

A base station apparatus according to the present invention is characterized in that it comprises a radio transmission apparatus with the above configuration. According to the above configuration, radio communication may be performed with accurate and efficient diversity transmission.

A base station apparatus according to the present invention comprising a radio transmission apparatus with the above configuration is characterized in that common control channel signals are transmitted at the same transmission power ratio between the antennas. According to the above configuration, the communication terminal apparatus may monitor the propagation path states of each antenna, as the common control channel signals are transmitted to the communication terminal apparatus at the same transmission power.

A communication terminal apparatus according to the present invention has a configuration comprising: a comparison section for comparison of the reception power between dedicated signals transmitted from two antennas performing diversity transmission; and an information generation section for generating information on the transmission power ratios between antennas for the above two antennas based on the comparison results of the above comparison section.

According to the above configuration, the base station apparatus may accurately and efficiently control the transmission power ratios between the antennas, as information for control of the transmission power ratios between the antennas is generated.

A communication terminal apparatus according to the present invention has a configuration where the above comparison section compares the reception power using the common control channel signals transmitted from the above base station apparatus in the above configuration.

According to the above configuration, the signals reflecting the propagation path states of each antenna may be received for monitoring the propagation path states of each antenna, as the common control channel signals are transmitted from the base station apparatus at the same transmission power.

A communication terminal apparatus according to the present invention has a configuration where it comprises a total amount calculation section in the above configuration, and the above information generation section generates information on the total amount of the power.

According to the above configuration, more accurate and efficient control of the transmission power ratios between the antennas may be realized in the base station apparatus, as information for control of the transmission power ratios between the antennas is generated in consideration of the total amount of the power.

A diversity transmission method according to the present invention comprises in a communication terminal apparatus: a step for comparison of the reception power between dedicated signals transmitted from two antennas performing diversity transmission; a step for generation of information on the transmission power ratios between the antennas for the above two antennas based on the above comparison results; and a step for transmission of the above information on the transmission power ratios between the antennas to the base station apparatus, and includes in the above base station apparatus: a step for gradual control of the transmission power ratios of the above two antennas based on the above information on the transmission power ratios between the antennas.

According to the above method, the transmission power ratios between the antennas may be accurately controlled without waste of energy distributed to the antennas, as weighting coefficients for the antennas are gradually switched not by fixing or extreme changing of the transmission power ratios between the antennas, but by weighting for antennas at transmission according to the amount and the ratio of the signal power of the antennas.

The diversity transmission method according to the present invention comprises in the above method: a step for calculation of the total amount of the reception power of the signals transmitted from two antennas performing diversity transmission; and a step for generation of information on the above total amount and for transmission of information on the above total amount to the above base station apparatus.

According to the above method, more accurate and efficient control of the transmission power ratios between the antennas may be realized, as control of the transmission power ratios between the antennas is performed in consideration of the total amount of the power.

As described above, the transmission power ratios between the antennas may be accurately controlled without waste of energy distributed to the antennas according to the present invention, as gradual switching of the weighting coefficients for antennas is realized not by fixing or extreme changing of the transmission power ratios between the antennas, but by weighting for antennas at transmission according to the amount and the ratio of the signal power of the antennas.

The present application is based on Japanese published unexamined patent application Hei-11 (1999)-268326 filed on September 22, 1999. And all the contents of the above application are incorporated herein.

### Industrial Applicability

The present invention may be applied to a base station apparatus and a communication apparatus in a digital radio communication system.

## Claims

1. A radio transmission apparatus comprising:
two antennas for diversity transmission; and
control means for gradual control of transmission power ratios of said two antennas based on information on the transmission power ratios between the antennas transmitted from a communication end.

2. A radio transmission apparatus according to claim 1, wherein said control means controls the transmission power ratios between the antennas to the total amount of the power based on information on the total amount of the power transmitted from said communication end.

3. A radio transmission apparatus according to claim 1, wherein said control means performs transmission power control for each of said two antennas based on control information on the transmission power transmitted from said communication end.

4. A base station apparatus comprising a radio transmission apparatus, wherein said radio transmission apparatus comprises:
two antennas for diversity transmission; and
control means for gradual control of transmission power ratios of said two antennas based on information on the transmission power ratios between the antennas transmitted from a communication end.

5. A base station apparatus for transmission of common control channel signals at the same transmission power ratio between antennas, comprising a radio transmission apparatus, wherein said radio transmission apparatus comprises:
two antennas for diversity transmission; and
control means for gradual control of transmission power ratios of said two antennas based on information on the transmission power ratios between the antennas transmitted from a communication end.

6. A communication terminal apparatus comprising:
comparison means for comparison of the reception power of dedicated signals transmitted from two antennas performing diversity transmission; and
information generation means for generation of information on transmission power ratios between the antennas for said two antennas based on the comparison results by said comparison means.

7. A communication terminal apparatus according to claim 6, wherein said comparison means compares the reception power using the common control channel signals transmitted from the base station apparatus according to claim 5.

8. A communication terminal apparatus according to claim 6, comprising total amount calculation means for obtaining the total amount of the reception power of the signals transmitted from two antennas performing diversity transmission, wherein said information generation means generates information on the total amount of the power.

9. A diversity transmission method comprising the steps of:
in a communication terminal apparatus,
comparing the reception power of dedicated signals transmitted from two antennas performing diversity transmission;
generating information on the transmission power ratios between antennas for said two antennas based on said comparison results; and
transmitting said information on the transmission power ratios between the antennas to a base station apparatus, and including the steps of:
in said base station apparatus,
gradual controlling the transmission power ratios of said two antennas based on said information on the transmission power ratios between the antennas.

10. A diversity transmission method according to claim 9, comprising the steps of:
calculating the total amount of the reception power of the signals transmitted from two antennas performing diversity transmission; and
generating information on said total amount and for transmission of said information on the total amount to said base station apparatus.
